# EUROPEAN PATENT SPECIFICATION

(11) **EP 3 068 974 B1**
(45) Date of publication and mention of the grant of the patent: **01.04.2020**
(21) Application number: 14866789.2
(22) Date of filing: 12.11.2014
(51) Int. Cl.: F01D 5/28, B23P 15/02, F01D 9/02, F01D 5/14, F01D 25/24

(54) **TURBINE COMPONENTS WITH NEGATIVE CTE FEATURES**
TURBINENKOMPONENTEN MIT NEGATIVEN WÄRMEAUSDEHNUNGSMERKMALEN
COMPOSANTS DE TURBINE À ÉLÉMENTS À CTE NÉGATIF

(30) Priority: 14.11.2013 US 201361904188 P
(43) Date of publication of application: 21.09.2016
(73) Proprietor: General Electric Company, Schenectady, NY 12345 (US)
(72) Inventor: ROCKSTROH, Todd, Jay, Cincinnati, OH 45215 (US); GIGLIOTTI, Michael Francis, Xavier, Niskayuna, NY 12309 (US); CARTER, William, Thomas, Niskayuna, NY 12309 (US); ABBOTT, David, Henry, Cincinnati, OH 45215 (US)
(74) Representative: Hafner & Kohl Patent- und Rechtsanwälte Partnerschaft mbB
(86) International application number: PCT/US2014/065215
(87) International publication number: WO 2015/119694

(56) References cited:
- EP-A1- 2 319 641
- EP-A1- 2 620 240
- EP-A2- 1 983 160
- WO-A2-2010/088069
- CN-A- 101 649 844
- DE-A1-102009 048 665
- US-B1- 8 142 874

## Description

### BACKGROUND OF THE INVENTION

This invention relates generally to turbine components, and more particularly to turbine components for use in high-temperature environments.

A typical gas turbine engine includes a turbomachinery core having a high pressure compressor, a combustor, and a high pressure turbine in serial flow relationship. The core is operab.le in a known manner to generate a primary gas flow. The high pressure turbine includes one or more stages which extract energy from the primary gas flow. Each stage comprises a stationary turbine nozzle followed by a downstream rotor carrying turbine blades. These "hot section" components operate in an extremely high temperature environment which promotes hot corrosion and oxidation of metal alloys.

In the prior art, hot section components are typically cast from nickel- or cobalt-based alloys having good high-temperature creep resistance, known conventionally as "superalloys." These alloys are primarily designed to meet mechanical property requirements such as creep rupture and fatigue strengths. The casting process is controlled to produce desired microstructures, for example directionally solidified ("DS") or single-crystal ("SX"). A single-crystal microstructure refers to a structure which is free from crystallographic grain boundaries. Single crystal casting requires a seed element (that is, a nucleation point for cooling) and careful control of temperatures during cooling. However, production of such structures is expensive and has relatively low manufacturing yields.

Accordingly, there is a need for a gas turbine engine component having greater high-temperature creep and stress rupture resistance.

DE 10 2009 048 665 A1 discloses a method of producing a turbine blade, wherein the turbine blade is produced by an additive production method. Thereby, cavities and/or lattice structures can be produced in one and the same process.

CN 101 649 844 A discloses a fan blade based on a hollow metal/composite material structure. An inner base body of the fan blade is in a rib structure with discrete space.

EP 1 983 160 A2 discloses a gas turbine engine vane having first and second members. The first member has a first surface section forming a suction side of an airfoil of the vane. A second surface section forms leading and trailing portions of a pressure side of the airfoil. A third surface section forms a recess between the leading and trailing portions.

WO 2010/088069 A2 discloses a material including inner and outer skins joined together by a core. The core has a different thermal conductivity than the inner skin to balance heat conduction therethrough.

US 8 142 874 B1 discloses a planar two material structure comprising a first material having a coefficient of thermal expansion greater than zero and a second material having a second coefficient of thermal expansion greater than zero.

### BRIEF DESCRIPTION OF THE INVENTION

This need is addressed by the subject-matters of the appended Claims.

According to one aspect of the invention, a turbine component includes: a metallic wall having opposed interior and exterior surfaces, the wall configured for directing a combustion gas stream in a gas turbine engine; and a metallic negative CTE structure rigidly attached to one of the surfaces.

According to another aspect of the invention, the negative CTE structure is rigidly attached to the interior surface.

According to another aspect of the invention, the negative CTE structure is monolithically formed with the metallic wall.

According to another aspect of the invention, the metallic wall forms part of a gas turbine engine airfoil.

According to another aspect of the invention, the metallic wall is a pressure side wall or suction side wall of the airfoil.

According to another aspect of the invention, the negative CTE structure comprises a repeating two-dimensional array of generally hourglass-shaped cells, each cell having two spaced-apart concave walls joined by two spaced-apart convex walls.

According to another aspect of the invention, the wall includes opposed, spaced-apart outer layers and a with a negative CTE structure filling the space between them.

According to another aspect of the invention, a method of making a component includes: depositing a metallic powder on a workplane; directing a beam from a directed energy source to fuse the powder in a pattern corresponding to a cross-sectional layer of the component; repeating in a cycle the steps of depositing and fusing to build up a wall in a layer-by layer fashion, the wall having opposed interior and exterior surfaces, the wall configured for directing a combustion gas stream in a gas turbine engine; and having metallic negative CTE structure monolithically formed with one of the surfaces.

According to another aspect of the invention, the negative CTE structure is monolithically formed with the interior surface.

According to another aspect of the invention, the wall is a pressure side wall or suction side wall of a gas turbine engine airfoil.

According to another aspect of the invention, the negative CTE structure comprises a repeating two-dimensional array of generally hourglass-shaped cells, each cell having two spaced-apart concave walls joined by two spaced-apart convex walls.

According to another aspect of the invention, the wall includes opposed, spaced-apart outer layers and a with a negative CTE structure filling the space between them.

### BRIEF DESCRIPTION OF THE DRAWINGS

The invention may be best understood by reference to the following description taken in conjunction with the accompanying drawing figures in which:
FIG. 1 is a schematic perspective view of an exemplary turbine component constructed in accordance with an aspect of the present invention;
FIG. 2 is a schematic view of an exemplary negative CTE structure;
FIG. 3 is a schematic view of the negative CTE structure according to the present invention;
FIG. 4 is a schematic view of another exemplary negative CTE structure;
FIG. 5 is a schematic cross-sectional view of the turbine component of FIG. 1;
FIG. 6 is a view taken along lines 6-6 of FIG. 5;
FIG. 7 is partially-sectioned schematic side view of an additive manufacturing apparatus constructed in accordance with an aspect of the present invention;
FIG. 8 is a view taken along lines 8-8 of FIG. 7;
FIG. 9 is partially-sectioned schematic side view of an additive manufacturing apparatus constructed in accordance with an aspect of the present invention;
FIG. 10 is a view taken along lines 10-10 of FIG. 9;
FIG. 11 is partially-sectioned schematic side view of an additive manufacturing apparatus constructed in accordance with an aspect of the present invention;
FIG. 12 is a view taken along lines 12-12 of FIG. 11;
FIG. 13 is a schematic plan view of a portion of a wall of a turbine component; and
FIG. 14 is a view taken along lines 14-14 of FIG. 13.

### DETAILED DESCRIPTION OF THE INVENTION

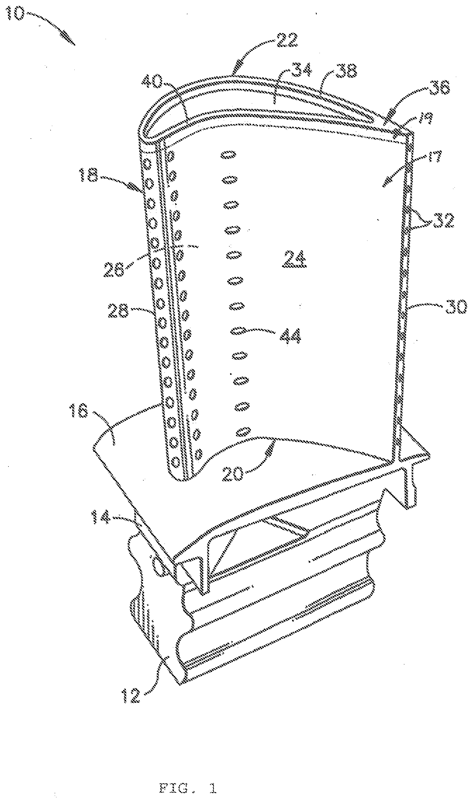

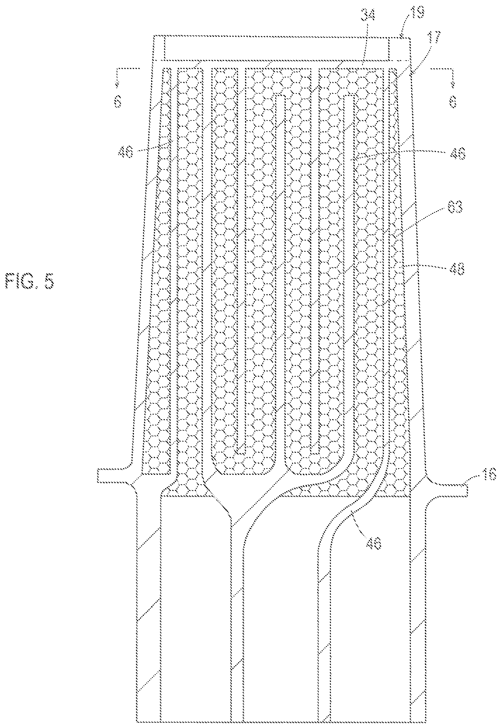

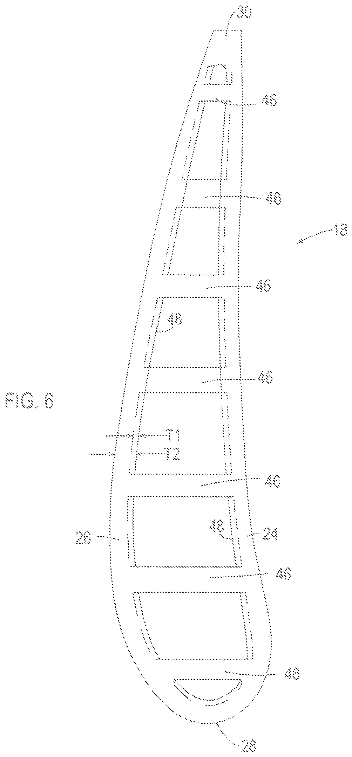

Referring to the drawings wherein identical reference numerals denote the same elements throughout the various views, FIG. 1 illustrates an exemplary turbine blade 10. The turbine blade 10 includes a conventional dovetail 12, which may have any suitable form including tangs that engage complementary tangs of a dovetail slot in a rotor disk (not shown) for radially retaining the blade 10 to the disk as it rotates during operation. A blade shank 14 extends radially upwardly from the dovetail 12 and terminates in a platform 16 that projects laterally outwardly from and surrounds the shank 14. A hollow airfoil 18 extends radially outwardly from the platform 16 and into the hot gas stream. The airfoil has a root 20 at the junction of the platform 16 and the airfoil 18, and a tip 22 at its radially outer end. The airfoil 18 has a concave pressure side wall 24 and a convex suction side wall 26 joined together at a leading edge 28 and at a trailing edge 30. Collectively the pressure side wall 24 and the suction side wall 26 constitute a peripheral wall that encloses an interior space, the peripheral wall having an interior surface facing the interior space, and an opposed exterior surface facing the exterior environment. The airfoil 18 may take any configuration suitable for extracting energy from the hot gas stream and causing rotation of the rotor disk. The airfoil 18 may incorporate a plurality of trailing edge cooling holes 32, or it may incorporate a number of trailing edge bleed slots (not shown) on the pressure side wall 24 of the airfoil 18. The tip 22 of the airfoil 18 is closed off by a tip cap 34 which may be integral to the airfoil 18 or separately formed and attached to the airfoil 18. An upstanding squealer tip 36 extends radially outwardly from the tip cap 34 and is disposed in close proximity to a stationary shroud (not shown) in the assembled engine, in order to minimize airflow losses past the tip 22. The squealer tip 36 comprises a suction side tip wall 38 disposed in a spaced-apart relationship to a pressure side tip wall 40. The tip walls 40 and 38 are integral to the airfoil 18 and form extensions of the pressure and suction side walls 24 and 26, respectively. The outer surfaces of the pressure and suction side tip walls 40 and 38 respectively form continuous surfaces with the outer surfaces of the pressure and suction side walls 24 and 26. A plurality of film cooling holes 44 pass through the exterior walls of the airfoil 18. The film cooling holes 44 communicate with the interior space of the airfoil 18. As seen in FIGS. 5 and 6, the interior of the airfoil 18 may include a complex arrangement of cooling passageways defined by internal walls 46, such as a serpentine configuration.

In order to have sufficient creep rupture and fatigue strengths, and to resist hot corrosion and oxidation, the turbine blade 10 is made from a material such as a nickel- or cobalt-based alloy having good high-temperature creep resistance, known conventionally as "superalloys." All materials, including such superalloys, expand or contract in response to a change in temperature. A material property called coefficient of thermal expansion or "CTE" relates the change in size (i.e. volume or linear dimension) of the material to the change in temperatures. Generally, CTE is expressed as αᵥ = 1/V (dV/dT) or α_{L} = 1/L (dL/dT), respectively, where α represents the CTE, V volume, L length, and T temperature.

Most materials including superalloys have a positive CTE, meaning that their dimensions increase with increasing temperatures, when considered as a homogenous mass, for example a rectangular solid. The positive CTE is a contributing factor to growth by creep and potential component failure by rupture.

Some structures exhibit a negative CTE as a result of their geometry, even though the constituent material has a positive CTE. In other words, the dimensions of the structure decrease with increasing temperatures. As used herein, the term "negative CTE structure" refers to any structure that exhibits this property.

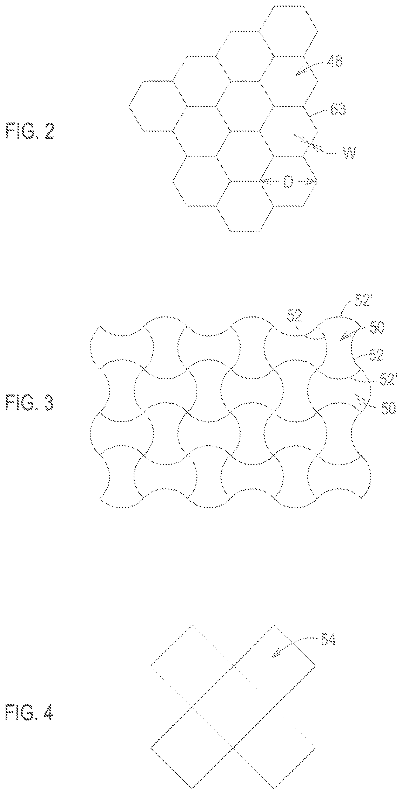

FIGS. 2-4 illustrate examples of several known structures which exhibit a negative CTE. FIG. 2 is a honeycomb structure comprising a repeating two-dimensional array of cells 48, where each cell 48 is a regular hexagon defined by walls 63.

FIG. 3 is a pattern comprising a repeating two-dimensional array of cells 50 which are generally hourglass-shaped, defined by a plurality of walls 52. Each cell 50 has two walls 52 which are concave relative to that cell 50, joined by two walls 52' which are convex relative to that cell 50. Each cell 50 is rotated 90 degrees relative to its neighboring cells 50. As a result, each concave wall 52 of a first cell 50 also defines a convex wall 52' of a neighboring cell 50.

FIG. 4 is a pattern comprising a repeating two-dimensional array of cells 54 having a square shape.

The airfoil 18 incorporates a negative CTE structure to provide a thermal expansion offsetting effect. In the illustrated example, best seen in FIGS. 5 and 6, the negative CTE structure comprises a pattern of hexagonal cells 48 as described above, formed integrally with the inner surfaces of the pressure and suction side walls 24 and 26, respectively. The negative CTE structure may cover all or a selected portion of the airfoil peripheral wall. As illustrated, the negative CTE structure is continuous, but could be implemented in localized areas within the airfoil 18. The walls 63 defining the cells 48 have a thickness or depth "T1" which is a fraction of the total thickness "T2" of the airfoil peripheral wall. A greater thickness or depth T1 is expected to have a greater thermal expansion offsetting effect, while at the same time reducing the mass of the peripheral airfoil wall to a greater degree. Accordingly, the exact thickness fraction or ratio T1/T2 will be selected depending on requirements of a specific application. In plan view (see FIG. 2), the cells 48 have a major dimension or diameter "D". This dimension, along with the thickness "W" of the walls 63, will also vary depending on the specific application.

It is noted that, solely considering the thermal expansion offsetting effect, the negative CTE structure could be disposed on the exterior surfaces of the airfoil 18, but for practical reasons such as maintaining the airfoil's aerodynamic characteristics and avoiding heat transfer to the airfoil 18, the negative CTE structure is preferably disposed on the interior surface of the airfoil peripheral wall.

The negative CTE structure defines a "scaffolding" which is rigidly attached to the airfoil 18. The negative CTE structure is a unitary, one piece, monolithic structure or element of the airfoil 18. The airfoil 18 operates in a high-temperature environment and is subject to creep and possible stress rupture, driven by thermal and mechanical loads, and the positive CTE of the base alloy. However, contraction of the negative CTE structure in response to high temperatures provides a countervailing force offsetting the component growth. This also provides a safety margin against component rupture.

It is noted that the turbine blade 10 described above is only one example of numerous types of components, generally designated "C" herein, which can incorporate a negative CTE structure. Nonlimiting examples of turbine components to which these principles apply include rotating airfoils (e.g. blades, buckets), nonrotating airfoils (e.g. turbine buckets, vanes), turbine shrouds, and combustor components. Each of these components has the common feature of a wall with interior and exterior surfaces, where the wall is configured for guiding or directing a combustion gas stream during the operation of a gas turbine engine.

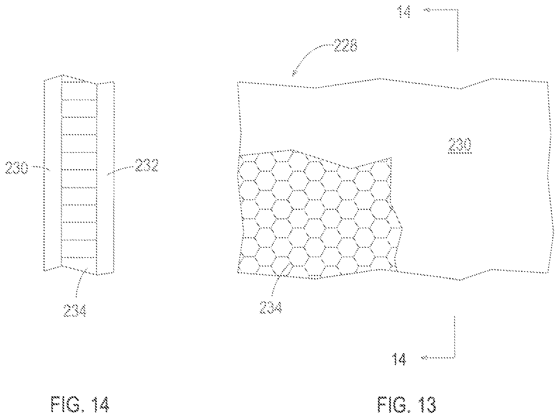

The negative CTE structure could also be incorporated directly into the interior structure of a component wall. For example, FIGS. 13 and 14 show a portion of a wall 228, generally representative of a turbine component wall, such as the pressure side wall 24 or suction side wall 28 described above. The wall 228 includes opposed, spaced-apart outer layers 230 and 232, with a negative CTE structure 234 filling the space between them.

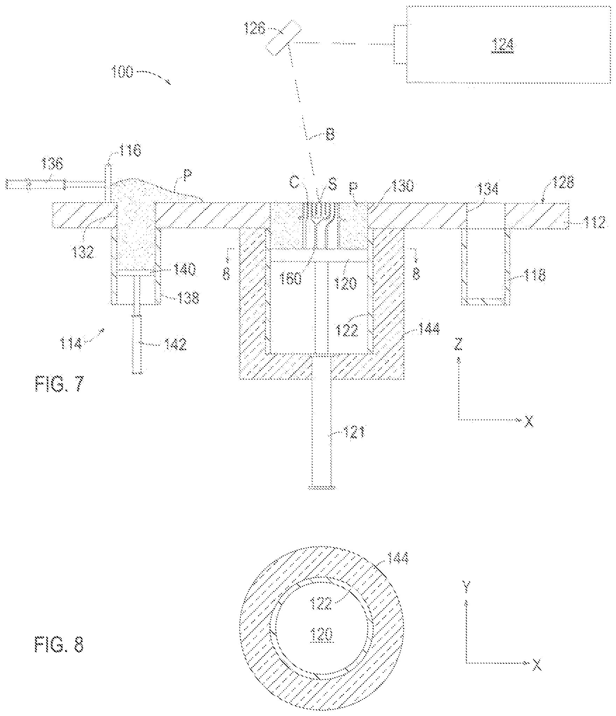

Components C incorporating a negative CTE structure as described above are especially suited for production using an additive manufacturing method, as the small-scale internal structures may be difficult or impossible to manufacture using conventional casting or machining processes. FIG. 7 illustrates schematically an apparatus 100 for carrying out an additive manufacturing method. The basic components are a table 112, a powder supply 114, a scraper 116, an overflow container 118, a build platform 120 optionally surrounded by a build enclosure 122, a directed energy source 124, and a beam steering apparatus 126. Each of these components will be described in more detail below. The apparatus 100 also optionally includes an external heat control apparatus which will be described below.

The table 112 is a rigid structure providing a planar worksurface 128. The worksurface 128 is coplanar with and defines a virtual workplane. In the illustrated example it includes a central opening 130 communicating with the build enclosure 122 and exposing the build platform 120, a supply opening 132 communicating with the powder supply 114, and an overflow opening 134 communicating with the overflow container 118.

The scraper 116 is a rigid, laterally-elongated structure that lies on the worksurface 128. It is connected to an actuator 136 operable to selectively move the scraper 116 along the worksurface 128. The actuator 136 is depicted schematically in FIG. 7, with the understanding devices such as pneumatic or hydraulic cylinders, ballscrew or linear electric actuators, and so forth, may be used for this purpose.

The powder supply 114 comprises a supply container 138 underlying and communicating with the supply opening, and an elevator 140. The elevator 140 is a plate-like structure that is vertically slidable within the supply container 138. It is connected to an actuator 142 operable to selectively move the elevator 140 up or down. The actuator 142 is depicted schematically in FIG. 7, with the understanding that devices such as pneumatic or hydraulic cylinders, ballscrew or linear electric actuators, and so forth, may be used for this purpose. When the elevator 140 is lowered, a supply of metallic powder "P" of a desired alloy composition may be loaded into the supply container 138. When the elevator 140 is raised, it exposes the powder P above the worksurface 128.

The build platform 120 is a plate-like structure that is vertically slidable below the central opening 130. It is connected to an actuator 121 operable to selectively move the build platform 120 up or down. The actuator 121 is depicted schematically in FIG. 7, with the understanding that devices such as pneumatic or hydraulic cylinders, ballscrew or linear electric actuators, and so forth, may be used for this purpose.

The overflow container 118 underlies and communicates with the overflow opening 134, and serves as a repository for excess powder P.

The directed energy source 124 may comprise any known device operable to generate a beam of suitable power and other operating characteristics to melt and fuse the metallic powder during the build process, described in more detail below. For example, the directed energy source 124 may be a laser having an output power density having an order of magnitude of about 10⁴ W/cm². Other directed energy sources such as electron beam guns are suitable alternatives to a laser.

The beam steering apparatus 126 comprises one or more mirrors, prisms, and/or lenses and provided with suitable actuators, and arranged so that a beam "B" from the directed energy source 124 can be focused to a desired spot size and steered to a desired position in an X-Y plane coincident with the worksurface 128.

As used herein, the term "external heat control apparatus" refers to apparatus other than the directed energy source 124 which is effective to maintain a component C positioned on the build platform 120 at an appropriate solutioning temperature (i.e. to maintain a predetermined temperature profile) and therefore control the crystallographic properties of the solidifying powder P during the build process. As will be explained in more detail below, the external heat control apparatus may operate by acting directly as a source of heat (i.e. thermal energy input) or by retaining heat generated by the directed energy heating process.

Examples of various kinds of external heat control apparatus are shown in FIGS. 5-12. In FIGS. 7 and 8, a layer of thermal insulation 144 surrounds the build enclosure 122. The thermal insulation 144 is effective to impede heat transfer from the component C being built up, thereby reducing its cooling rate and maintaining elevated temperature.

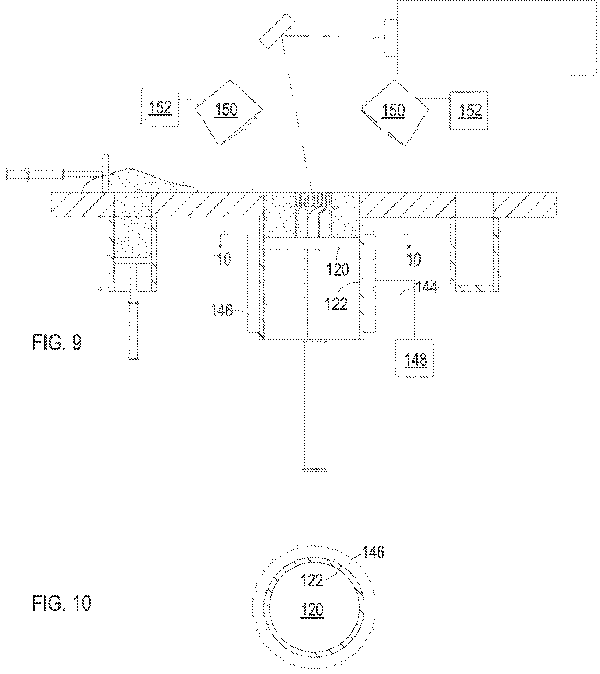

FIGS. 9 and 10 illustrate an external heat control apparatus including one or more heaters. A belt-type electric resistance heater 146 is wrapped around the exterior of the build enclosure 122 and connected to an electric power source 148. When active, the heater 146 heats the build enclosure 122 (and therefore the component C inside) through thermal conduction.

Another optional type of external heat control apparatus is a radiation heating source. For example, FIG. 9 shows quartz lamps 150 (also referred to as quartz halogen lamps) arranged with a line-of-sight to the component C and connected to an electric power source 152. Such lamps are commercially available, rated at several thousand watts output each. When active, the quartz lamps 150 heat the component C through radiation heat transfer. The quartz lamps 150 may be used instead of or in addition to the belt heater 146 described above.

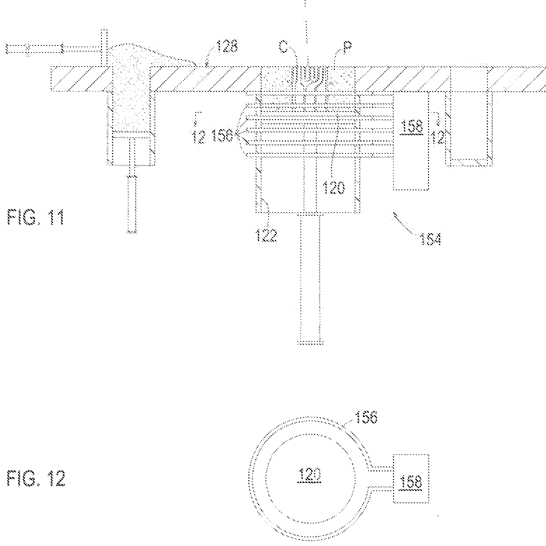

Another option for the external heat control apparatus is inductive heating, in which an AC current flowing in an induction coil induces a magnetic field which in turn induces eddy currents in a nearby conductive object, resulting in resistance heating of the object. In the example shown in FIGS. 11 and 12, an induction heater 154 includes one or more individual induction coils 156 surrounding the build platform 120, connected to an electric power source 158. In the illustrated example, multiple induction coils 156 are provided. When active, the induction heater 154 is effective to heat the component C. It has been demonstrated experimentally by the inventors that an external induction heating 154 of this type will preferentially heat the melted/solidified component C within a powder bed without heating the loose powder P sufficiently to cause it to melt or otherwise attach to the component C being built.

The build process for a component "C" using the apparatus described above is as follows. The build platform 120 is moved to an initial high position. Optionally, a seed element 160 (see FIG. 7) may be first placed on the build platform 120. The seed element 160 serves as a nucleation point for cooling and has a selected crystallographic structure. If it is desired to manufacture a single-crystal component C, the seed element 160 will have a single-crystal microstructure. Such seed elements 160 can be manufactured by known techniques. Once the seed element 160 is positioned, the build platform 120 is lowered below the worksurface 128 by a selected layer increment. The layer increment affects the speed and resolution of the component C. As an example, the layer increment may be about 10 to 50 micrometers (0.0003 to 0.002 in.). Powder "P" is then deposited over the build platform 120 and the seed element 160. For example, the elevator 140 of the supply container 138 may be raised to push powder through the supply opening 132, exposing it above the worksurface 128. The scraper 116 is moved across the worksurface to spread the raised powder P horizontally over the build platform 120. Any excess powder P drops through the overflow opening 134 into the overflow container 118 as the scraper 116 passes from left to right. Subsequently, the scraper 116 may be retracted back to a starting position.

The directed energy source 124 is used to melt a two-dimensional cross-section of the component C being built. The directed energy source 124 emits a beam "B" and the beam steering apparatus 126 is used to steer or scan the focal spot "S" of the beam B over the exposed powder surface in an appropriate pattern. The exposed layer of the powder P is heated by the beam B to a temperature allowing it to melt, flow, and consolidate.

The build platform 120 is moved vertically downward by the layer increment, and another layer of powder P is applied in a similar thickness. The directed energy source 124 again emits a beam B and the beam steering apparatus 126 is used to steer or scan the focal spot S of the beam B over the exposed powder surface in an appropriate pattern. The exposed layer of the powder P is heated by the beam B to a temperature allowing it to melt, flow, and consolidate both within the top layer and with the lower, previously-solidified layer.

This cycle of moving the build platform 120, applying powder P, and then directed energy melting the powder is repeated until the entire component C is complete. The scan patterns used are selected such that the negative CTE structure is formed as an integral part of the component C.

The component C need not have a homogenous alloy composition. The composition may be varied by changing the composition of the powder P during the additive manufacturing process, to produce varying layers or sections of the component C. For example, the airfoil 18 shown in FIG. 1 may having a radially inner portion or body portion 17 (below the dashed line) with a first alloy composition, and a radially outer portion or tip portion 19 (above the dashed line) with a second alloy composition different from the first alloy.

If the component C is optionally formed with a single crystal microstructure, this requires control of temperature and cooling rates throughout the component C during fabrication. The directed energy heat input from is sufficient to maintain required temperatures for the uppermost portion of the component C, near where new layers are actively being laid down, but not for its entire extent. To address this problem, the method of the present invention uses the external heat control apparatus during the cycle of powder deposition and directed energy melting.

The external heat control apparatus is operable to control both the temperature and the heating rate of the entire component C. For example, one known solutioning heat treatment includes the steps of: (1) heating a component to about 1260°C (2300°F) for about two hours to homogenize the microstructure, (2) gradually raising the temperature from about 1260°C (2300°F) to a solutioning temperature of about 1320°C (2415°F) at a rate of about 5.5°C (10°F) per hour, then (3) maintaining the component at that temperature for about two hours, followed by (4) cooling to an aging temperature of about 1120°C (2050°F) in three minutes or less.

Because the external heat control apparatus is separate from the directed energy source 124, it may also be used for other heat treatment processes, such as aging the component C after the build process is complete. For example, one known aging process involves primary aging the component at the aging temperature for a period of hours to achieve the desired microstructure.

The turbine components described herein have several advantages over the prior art. The negative CTE structure offsets component creep and provides a margin against stress rupture. The negative CTE structure could enable lesser alloys to perform in critical engine applications, possibly eliminating the need for single crystal materials. The negative CTE structure can also serve as part of the thermal mechanical system to reduce the bulk temperature of the component heat transfer. The negative CTE structure can serve the function of turbulence promoters or "turbulators" which are more dense than prior art cast turbulators for improved heat transfer. Likewise, if the negative CTE structure is contained within the walls of the outer and inner surfaces of an airfoil body, it can also serve as a heat exchanger to more efficiently cool the exterior walls.

The foregoing has described turbine components having a negative CTE structure and a method for their manufacture. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A turbine component (10), comprising:
a metallic wall (24, 26, 228) consisting of a material with a positive CTE and having opposed interior and exterior surfaces, the wall configured for directing a combustion gas stream in a gas turbine engine; and
a hollow metallic negative CTE structure (48, 50, 54) rigidly attached to one of the surfaces, wherein the dimensions of said structure (48, 50, 54) decrease with increasing temperatures, wherein the negative CTE structure is monolithically formed with the metallic wall (24, 26, 228), **characterized in that** the negative CTE structure comprises a repeating two-dimensional array of generally hourglass-shaped cells (50), each cell having two spaced-apart concave walls (52) joined by two spaced-apart convex walls (52').

2. The component (10) of claim 1 wherein the negative CTE structure (48, 50, 54) is rigidly attached to the interior surface.

3. The component (10) of claim 1 wherein the metallic wall (24, 26) forms part of a gas turbine engine airfoil (18).

4. The component (10, 228) of claim 3 wherein the metallic wall (24, 26) is a pressure side wall (24) or suction side wall (26) of the airfoil.

5. The component (10) of claim 1 wherein the wall (228) includes opposed, spaced-apart outer layers (230, 232) and a with a negative CTE structure (234) filling the space between them.

6. A method of making a component (C, 18), comprising:
depositing a metallic powder (P) on a workplane (128);
directing a beam from a directed energy source (124) to fuse the powder (P) in a pattern corresponding to a cross-sectional layer of the component (C);
repeating in a cycle the steps of depositing and fusing to build up a wall in a layer-by layer fashion, the wall (24, 26, 228) consisting of a material with a positive CTE and having opposed interior and exterior surfaces, the wall (24, 26, 228) configured for directing a combustion gas stream in a gas turbine engine; and having hollow metallic negative CTE structure (48, 50, 54) monolithically formed with one of the surfaces, **characterized in that** the negative CTE structure comprises a repeating two-dimensional array of generally hourglass-shaped cells (50), each cell having two spaced-apart concave walls (52) joined by two spaced-apart convex walls (52').

7. The method of claim 6 wherein the negative CTE structure (48, 50, 54) is monolithically formed with the interior surface.

8. The method of claim 6 wherein the wall (24, 26) is a pressure side wall (24) or suction side wall (26) of a gas turbine engine airfoil (18).

9. The method of claim 6 wherein the wall (228) includes opposed, spaced-apart outer layers (230, 232) and a with a negative CTE structure (234) filling the space between them.

## Patentansprüche

1. Turbinenbauteil (10), aufweisend:
eine Metallwand (24, 26, 228), die aus einem Material mit einem positiven CTE (Wärmeausdehnungskoeffizient) besteht und gegenüberliegende Innen- und Außenoberflächen aufweist, wobei die Wand eingerichtet ist, einen Strom von Verbrennungsgas in einem Gasturbinenmotor zu leiten; und
eine hohle Metallstruktur mit negativem CTE (48, 50, 54), die starr an einer der Oberflächen angebracht ist, wobei die Abmessungen dieser Struktur (48, 50, 54) mit zunehmenden Temperaturen abnehmen, wobei die Struktur mit negativem CTE monolithisch mit der Metallwand (24, 26, 228) ausgebildet ist, **dadurch gekennzeichnet, dass** die Struktur mit negativem CTE ein sich wiederholendes, zweidimensionales Array aus allgemein sanduhrförmigen Zellen (50) aufweist, wobei jede Zelle zwei beabstandete, konkave Wandungen (52) aufweist, die durch zwei beabstandete, konvexe Wandungen (52') verbunden sind.

2. Bauteil (10) nach Anspruch 1, wobei die Struktur mit negativem CTE (48, 50, 54) starr an der Innenoberfläche angebracht ist.

3. Bauteil (10) nach Anspruch 1, wobei die Metallwand (24, 26) einen Teil eines Gasturbinenmotor-Tragflügels (18) bildet.

4. Bauteil (10, 228) nach Anspruch 3, wobei die Metallwand (24, 26) eine druckseitige Wand (24) oder ansaugseitige Wand (26) des Tragflügels ist.

5. Bauteil (10) nach Anspruch 1, wobei die Wand (228) gegenüberliegende, beabstandete Außenschichten (230, 232) und eine Struktur mit negativem CTE (234) aufweist, die den Raum zwischen diesen füllt.

6. Verfahren zur Herstellung eines Bauteils (C, 18), umfassend:
Abscheiden eines Metallpulvers (P) auf einer Arbeitsebene (128);
Richten eines Strahls aus einer gerichteten Energiequelle (124), um das Pulver (P) in ein Muster, das einer Querschnittsschicht des Bauteils (C) entspricht, aufzuschmelzen;
Zyklisches Wiederholen der Schritte zum Abscheiden und Aufschmelzen, um schichtweise eine Wandung aufzubauen, wobei die Wandung (24, 26, 228) aus einem Material mit positivem CTE besteht und gegenüberliegende Innen- und Außenoberflächen aufweist, wobei die Wandung (24, 26, 228) eingerichtet ist, einen Verbrennungsgasstrom in einem Gasturbinenmotor zu leiten; und eine hohle Metallstruktur Struktur mit negativem CTE (48, 50, 54) aufweist, die monolithisch mit einer der Oberflächen ausgebildet sind, **dadurch gekennzeichnet, dass** die negativen CTE-Struktur ein sich wiederholendes, zweidimensionales Array allgemein sanduhrförmiger Zellen (50) aufweist, wobei jede Zelle zwei voneinander beabstandete, konkave Wandungen (52) aufweist, die durch zwei voneinander beabstandete, konvexe Wandungen (52') verbunden werden.

7. Verfahren nach Anspruch 6, wobei die Struktur mit negativem CTE (48, 50, 54) monolithisch mit der Innenoberfläche ausgebildet wird.

8. Verfahren nach Anspruch 6, wobei die Wandung (24, 26) eine druckseitige Wand (24) oder ansaugseitige Wand (26) eines Gasturbinenmotor-Tragflügels (18) ist.

9. Verfahren nach Anspruch 6, wobei die Wandung (228) gegenüberliegende, beabstandete Außenschichten (230, 232) und eine Struktur mit negativem CTE (234) aufweist, die den Raum zwischen diesen füllt.

## Revendications

1. Composant (10) de turbine, comprenant :
une paroi métallique (24, 26, 228) consistant en un matériau à coefficient de dilatation thermique (CTE) positif et comportant des surfaces intérieure et extérieure opposées, la paroi étant conçue pour diriger un courant de gaz de combustion dans une turbine à gaz ; et
une structure métallique creuse (48, 50, 54) à CTE négatif, fixée rigidement à l'une des surfaces, les dimensions de ladite structure (48, 50, 54) diminuant lors de l'augmentation des températures, la structure à CTE négatif étant formée de manière monolithique avec la paroi métallique (24, 26, 228), **caractérisé en ce que** la structure à CTE négatif comprend une matrice bidimensionnelle répétitive de cellules (50) généralement en forme de sablier, chaque cellule comportant deux parois concaves espacées (52) reliées par deux parois convexes espacées (52').

2. Le composant (10) de la revendication 1, dans lequel la structure (48, 50, 54) à CTE négatif est fixée rigidement à la surface intérieure.

3. Le composant (10) de la revendication 1, dans lequel la paroi métallique (24, 26) fait partie d'un profil (18) de la turbine à gaz.

4. Le composant (10) de la revendication 3, dans lequel la paroi métallique (24, 26) est une paroi côté pression (24) ou une paroi côté aspiration (26) du profil.

5. Le composant (10) de la revendication 1, dans lequel la paroi (228) comprend des couches externes espacées et opposées (230, 232), et une structure (234) à CTE négatif remplissant l'espace entre lesdites couches.

6. Procédé de fabrication d'un élément (C, 18), le procédé comprenant :
le dépôt d'une poudre métallique (P) sur un plan de travail (128) ;
diriger un faisceau en provenance d'une source d'énergie dirigée (124) afin de fondre la poudre (P) selon un motif correspondant à une couche en section transversale de l'élément (C) ;
la répétition, de manière cyclique, des étapes de dépôt et de fusion afin de construire une paroi couche par couche, la paroi (24, 26, 228) consistant en un matériau à coefficient de dilatation thermique (CTE) positif et comportant des surfaces intérieure et extérieure opposées, la paroi (24, 26, 228) étant conçue pour diriger un courant de gaz de combustion dans une turbine à gaz ; et comportant une structure métallique creuse (48, 50, 54) à CTE négatif, formée de manière monolithique avec l'une des surfaces, **caractérisé en ce que** la structure à CTE négatif comprend une matrice bidimensionnelle répétitive de cellules (50) généralement en forme de sablier, chaque cellule comportant deux parois concaves espacées (52) reliées par deux parois convexes espacées (52').

7. Le procédé de la revendication 6, dans lequel la structure (48, 50, 54) à CTE négatif est formée de manière monolithique avec la surface intérieure.

8. Le procédé de la revendication 6, dans lequel la paroi (24, 26) est une paroi côté pression (24) ou une paroi côté aspiration (26) d'un profil (18) de la turbine à gaz.

9. Le procédé de la revendication 6, dans lequel la paroi (228) comprend des couches externes espacées et opposées (230, 232) et une structure (234) à CTE négatif remplissant l'espace entre lesdites couches.
